# EUROPEAN PATENT SPECIFICATION

(11) **EP 2 895 315 B1**
(45) Date of publication and mention of the grant of the patent: **24.08.2016**
(21) Application number: 13803216.4
(22) Date of filing: 29.08.2013
(51) Int. Cl.: B29C 59/02, A45D 33/00, B44C 1/24

(54) **METHOD AND DEVICE FOR IMPRESSING IMAGES IN A PRESSED POWDERY COSMETIC MATERIAL**
VERFAHREN UND VORRICHTUNG ZUM PRÄGEN VON BILDERN IN EINEM GEPRESSTEN KOSMETISCHEN PUDERMATERIAL
PROCÉDÉ ET DISPOSITIF D'IMPRESSION D'IMAGES DANS UNE MATIÈRE COSMÉTIQUE PULVÉRULENTE COMPRIMÉE

(30) Priority: 12.09.2012 IT MI20121508
(43) Date of publication of application: 22.07.2015
(73) Proprietor: Nastri-Tex S.r.l., 21052 Busto Arsizio (VA) (IT)
(72) Inventor: MOCCHETTI, Federico, 21052 Busto Arsizio (VA) (IT)
(74) Representative: Grimaldo, Andrea
(86) International application number: PCT/IB2013/058112
(87) International publication number: WO 2014/041455

(56) References cited:
- EP-A1- 1 842 652
- EP-A1- 2 218 436
- IT-B- 1 134 390
- US-A- 4 374 796
- US-A- 4 884 601

## Description

### TECHNICAL FIELD

The present invention relates to the cosmetic powder field, particularly to the impression of images in cosmetic powder charges pressed into containers.

### PRIOR ART

In the powdery cosmetic field it is known to arrange a charge of cosmetic powder that is housed into suitable containers, which are on the market as small packages made of plastic material from which the cosmetic is taken by means of a suitable tool, such as, for example a brush or the like.

More in details, the cosmetics produced from pressed cosmetic powder for example are powders, blushers, bronzers, eye shadows, all over.

Generally, the technique for packaging these cosmetics provides a certain amount (or charge) of cosmetic powder to be placed in a metal (steel, sheet or aluminum) pan and to be pressed with a certain force therein, such to be compact and ready to be taken by means of a brush or the like; therefore the pan then (in the last packaging step) is inserted in the final plastic package, that can be shaped in different manners, with or without a lid, depending on needs.

In order to perform the pressing operation presses are used which are equipped with a male mould and a suitable counterpart: the counterpart supports the pan and the male mould is moved near the pan with the cosmetic powder, acting a pressure thereon sufficient for compacting it (or pressing it) in the pan; the action moving the pan and the male mould one near the other one can be performed by moving the first one towards the second one or vice versa, depending on the plant desired to be used.

In order to prevent cosmetic powder from depositing on the male mould, damaging the following products, a sheet support is used, so called in technical jargon as "intermediate sheet" or, more simply only as "intermediate", which is interposed, during the pressing step, between the male mould and the cosmetic powder.

Such intermediate sheet has to be porous in order to allow air, naturally provided in the non-pressed cosmetic powder, to be removed during the pressing step, such to avoid air, captured into the pressed powder, from being discharged later, causing cracks and breakages in the pressed powder.

Intermediate sheets are known in the prior art, for example made of polyamide, polyester, acetate, of polyethylene-based or cellulose and polyethylene-based materials, however no further reference is made thereto here.

In some occasions, it is necessary to impress, on the visible surface of the pressed cosmetic powder, an image, which sometimes is indicative of the product, of the manufacturer or of the line, or more generally it is a fancy image for marketing purposes.

It has to be noted now that the term "image," means without distinction in this description and in the claims bellow, both a fancy drawing and one or more alphanumeric characters, and a combination thereof.

When it is necessary to draw an image in the pressed powder, different solutions are used.

The most widely used solution it to shape the surface of a male mould that contacts the powder to be pressed, by arranging thereon a profile in relief (or bas-relief depending on needs), that during the pressing of cosmetic powder makes the desired image.

In these cases the intermediate sheets used, in addition to be porous, have to be also particularly flexible in order to allow the male mould to impress the image in the powder during the pressing step.

To this extent document US4374796 is known, which shows cosmetic material prepared by mixing powder cosmetic material with a binder and solvent, the material being injected under a predetermined pressure into a hollow closed space partially defined by a porous absorbing material, whereby the solvent in the cosmetic material is absorbed into the absorbing material and the powder cosmetic material is solidified in the hollow closed space.

Although this technique is functional it has some drawbacks.

Specifically, a first drawback is related to the fact that the male mould (usually made of metal) has to be suitably processed in order to bear the profile that it will generate on the powder: this means that, in other words, each time a certain image is desired to be impressed on the cosmetic, it is necessary to produce/ install a suitably dedicated mould, with obvious additional costs.

Moreover the Applicant has found a considerable drawback in the prior art, related to the fact that the known method is not able to make images having at the same time a good definition (very thin lines, less than one millimeter of thickness of the recess or relief left in the cosmetic powder that constitutes the line of the image) and a high complexity (intended as a plurality of close lines with a variable curvature intersecting each other in different manners, such as for example the case of the petals of a flower or the lacework of a shawl).

In these cases, often, the images made by the known technique have angles of connection between the lines of the image that are little accurate or which have sharp edges not well defined: in substance the "definition" or quality of the image is negatively affected by the contemporaneous presence of very thin lines and a plurality of close lines.

This situation derives mainly from the provision of the intermediate sheet, that inevitably worsens the impression of the lines on the powder during the pressing step since it is interposed between the male mould and the powder.

Another drawback is related to the high technological ability necessary for carrying out the known method just described and the relevant instruments: one has to consider that cosmetics often are high cost materials and that even a small defect of the pressed powder surface in the finished product defines it inevitably as a production waste; especially when cosmetics are of high level, defects on the visible surface of the pressed powder are absolutely unacceptable both for the end user and for the manufacturer.

Due to such need and to the high level of ability and accuracy necessary for generating the male mould and for setting the pressure of the press (the parameters change depending on a plurality of factors: characteristics of the cosmetic powder and of the intermediate, temperatures, pressures, air amount to be discharged in the pressing step etc.) many companies currently are not able to perform such operations by themselves and are obliged to outsource such cosmetic manufacturing step, with a consequent increase in the final costs thereof.

### OBJECTS AND SUMMARY OF THE INVENTION

It is the object of the present invention to overcome the drawbacks of the prior art.

Particularly, it is an object of the present invention to provide a method and a device for impressing images onto a pressed powdery cosmetic which is simple to be carried out, relatively inexpensive and that allows a high definition and quality of the image to be obtained, which otherwise could not be obtained by the known technique.

Another object of the invention is to provide a method for impressing images in charges of cosmetic powders pressed into containers that is relatively simple to be carried out.

Another object of the invention is to provide a method and device relatively rapid to be arranged if the images to be impressed onto the cosmetic powder are to be changed.

The idea at the base of the present invention is to print the intermediate sheet with a profile in relief able to generate, during the step pressing the powdery cosmetic, the desired image thereon.

In this manner, if one desires to change the image, it is sufficient to change the intermediate sheet, with a considerable reduction in costs and set-up time of the press.

Moreover this solution allows an image to be impressed which has an optimal quality even in the case of a plurality of very thin lines close with each other: the image obtained in this manner has a high level of definition, considerably higher than that of the prior art, even with thin lines, in the order of one millimeter or less or with radii of curvature lower than one millimeter or with well-defined sharp edges and a plurality of adjacent or intersecting lines.

Further advantageous characteristics are the object of the annexed claims which are an integral part of the present description.

### BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Figures 1-4 are different moments of the method according to the invention;
Figure 5 is a plan view of a printed intermediate sheet according to the invention;
Figure 6 is a plan view of a container with a pressed powdery cosmetic material therein wherein an image is impressed according to the teaching of the invention;
Figure 7 is a variant of the printed intermediate sheet of fig.5.

### DETAILED DESCRIPTION OF THE INVENTION

While the invention is susceptible of various modifications and alternative forms, some relevant described embodiments are shown in the drawings and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc.", "or" indicates non-exclusive alternatives without limitation unless otherwise noted. The use of "including" means "including, but not limited to," unless otherwise noted.

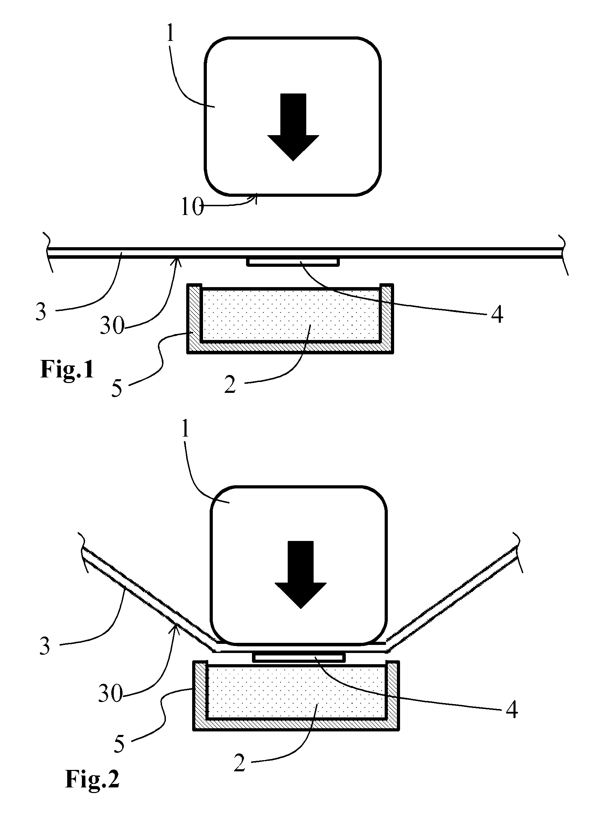

With reference to the annexed figures, figs. 1-4 show different successive moments of the method according to the invention, like a cinematograph.

These figures show a male mould 1 usually connected to actuating systems of a press, particularly a press for cosmetic materials or powders, not shown since known in itself; generally such presses are powered by compressed air, usually (but with no limitations) with a pressure of about 100 psi; consider that such value is variable depending on the powdery cosmetic material 2 desired to be pressed and on other technological characteristics of the pressing process (type of material, size/shape of the container, of the pan etc. ), that are not analyzed in detail in the present disclosure since they are not essential for understanding the invention.

It has to be noted that the surface 10 of the male mould 1 facing the charge of powdery cosmetic material 2 is smooth.

It can be, as in the figure, substantially flat or curved (concave or convex) depending on needs; anyway such surface 10 preferably has no reliefs or shaping, such that if it is pressed on the charge of cosmetic material 2 it will not generate any reliefs or depressions representing images.

In figure 1 the charge of powdery cosmetic material 2 is in the non-pressed condition that is not packed, namely a certain amount of air is captured between the grains or particles of the powder which causes the volume taken by the charge 2 to be higher than that of only the solid particles composing it; in this figure, moreover the male mould 1 is in a remote position and it begins to move near (in the direction of the arrow) the charge of powdery cosmetic material 2.

It has to be understood that in the present description, for merely illustrative purposes and not limitative ones, a male mould is described and shown which moves towards the pan containing the cosmetic powder; in this sense also the solutions wherein the pan and the counterpart upon which it rests are movable towards the male mould, which on the contrary is stationary, or even the solutions wherein both the counterpart and the mould are movable have to be considered as equivalents.

An intermediate sheet 3 is interposed between the male mould 1 and the charge of powdery cosmetic material 2.

According to the teaching provided herein such sheet 3 is provided with at least a profile printed in relief 4 at least in correspondence with the face 30 of the sheet 3 intended to come into contact with the charge of powdery cosmetic material 2.

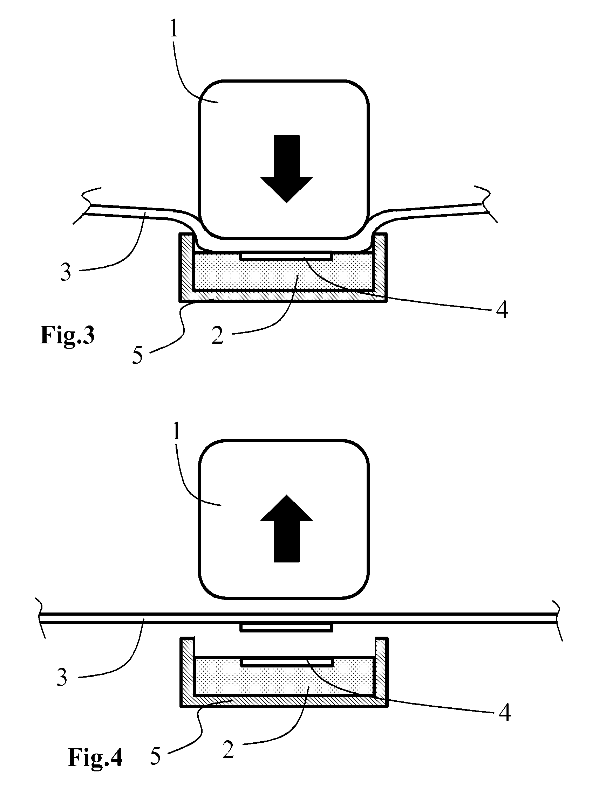

Especially such profile 4 is able to impress a desired image in said powdery cosmetic material during the real pressing step, shown in fig.3, wherein the air captured between the solid particles of the charge of powdery cosmetic material 2 is removed due to the compression given by the male mould 1.

In the figures the thickness of the profile 4 has been increased with respect to the thickness in the reality (and substantially it is the same as the thickness of the sheet 3) for mere clarity needs when reading the drawings: therefore such figures have not to be considered when evaluating the dimensional ratios between the thickness of the profile 4 and of the sheet 3.

The charge of the powdery cosmetic material 2 is contained in a pan 5 of a box or container (not shown as a whole); such pan 5 rests on a counter-mould (not show as well) for generating the reaction force to the pushing of the male mould 1 and for allowing the charge of powdery cosmetic material 2 to be compressed.

Figure 2 shows a moment of the method shown an instant before it begins to compress the charge of powdery cosmetic material 2, which is shown on the contrary in fig.3 when the compression has ended.

Therefore it can be noted how the print of the profile 4 remains impressed, in this case like a bas-relief, on the charge of pressed powdery cosmetic material 2.

Once this step ends, such as shown in fig.4, the male mould 2 moves away and the pan 5 with the charge of pressed powdery cosmetic material 2 can be removed from the press and passed to other treatments or packed, depending on needs.

As just described, therefore, the method for impressing images in a pressed powdery cosmetic material according to the present invention, comprises a step pressing said powdery cosmetic material obtained by a male mould 1 that pushes on said powdery cosmetic material 2 for pressing or packing it, preferably in a pan 5, it being provided, in such pressing step, to interpose between said male mould and said powder cosmetic material an intermediate sheet 3.

This latter is provided with at least one profile 4 printed in relief at least in correspondence with the face intended to come into contact with the charge of powdery cosmetic material 2, said profile 4 being able to impress a desired image in said powdery cosmetic material 2 during said pressing step.

Thus the definition or quality of the image obtained is very high, even in the case of very thin lines, close to each other and intersecting each other, thus solving the prior art problems.

The making of the profile 4 by printing techniques has considerable advantages: these ones allow the intermediate sheet 3 to be made in a simple and inexpensive manner.

Moreover the technique for making the profile 4 by printing it, allows the image obtained on the charge 2 to be easily changed without the need of modifying the male mould 2, thus reducing the costs and time of the process, that meanwhile becomes more versatile and rapid, potentially implementable by a plurality of subjects which are also less developed from the technological point of view.

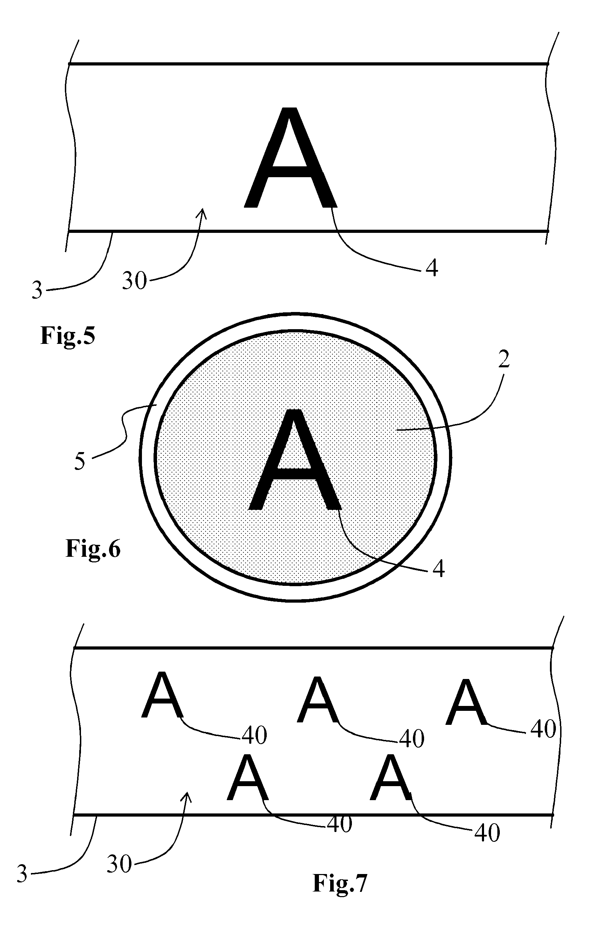

As regards specifically the type of material usable for the intermediate sheet 3, shown in fig.5, it is preferably polyamide.

Preferably the sheet is a polyamide fabric, that due to its nature constitutes a net through which a certain amount of air passes (necessary for discharging it in the pressing step).

The choice of the fibers, its arrangement (number of threads in warp and weft) and the finishing type (fibers squashed or not) defines a higher or lower passage of air, that the person skilled in the art can select depending on the other operating parameters involved.

If instead of a fabric a plastic film is selected to be used, then it will be necessary to provide it with microholes, for example with a diameter of the holes about of 100/200 micron with a density of about 600 microhole by cm².

As regards the ink (meaning the semi-liquid based material generating the profile 4) used for printing the profile 4 it is advantageously a PVC based ink.

Preferably it is a serigraphy ink, deposited with a desired thickness on the sheet.

Still more in detail, the ink comprises a suspension of polyvinyl chloride (PVC) in plasticizers and it is like an homogeneous liquid mixture with a rheology which can change at room temperature from fluid to dense paste.

The ink, after being deposited, is dried preferably by heat treatment, with an initial step, at gelling temperatures from 60° to 100°C transforming the fluid into a solid or semi-solid mass, but having low mechanical characteristics and with an optional subsequent step comprising a further heating at 140-180°C where melting occurs, that is the complete dissolution of the polymer in the plasticizer; if such melting temperature is reached and kept for a sufficient time a product with considerable physical and mechanical properties is obtained.

Still more preferably it is marketed under Plastisol trademark.

The preferred printing technique is serigraphy.

Other materials advantageously usable for the layer 3 are Polyester, Elastomers, Acetate, polyethylene, Polyamide and/or Polyester and/or Polyethylene with the nonwoven material technology, Cellulose, Fluff Pulp and Ethylene Vinyl Acetate (EVA).

The person skilled in the art, considering the teaching provided herein, can provide to implement the changes that he/she considers to be the most suitable for obtaining the desired results; such changes are to be intended as the object of the present invention too.

A change particularly useful is the one shown in figure 7; in this case on the same sheet 3 a plurality of profiles 40 are printed, which can be all equal (as in the figure) or even different with respect to each other: this solution is particularly useful when the press is provided with a plurality of male moulds 1 or when the sheet 3 is provided to be moved for involving different pans 5.

Still another variant relates to the length of the sheet 3: it can be as a single flat sheet or a roll, which is unwound for sequentially pressing different pans 5, for example in plants or presses operating continuously.

According to a further particularly advantageous variant it is possible to provide to deposit on the profile 4 printed in relief, in correspondence with its face intended to come into contact with the charge of powdery cosmetic material 2, a layer of transfer ink, intended to color (completely or partially) the image impressed in the powdery cosmetic material 2 during the pressing step.

By the term "transfer ink" we mean an ink intended to be transferred at least partially on the cosmetic powder such to pigment or colour it at least partially.

Consider that in the prior art the fact of providing to colour the charge of powdery cosmetic material for generating drawings is known in itself, however colouring in the prior art occurs very slowly: by using a technique of the so called "stencil" type an operator places a template on the charge of already pressed cosmetic material and it colours by spraying the part thereof free from the template.

As it is easy to understand this known technique of the "stencil" type is very laborious, it needs a manual intervention and therefore on the whole it is not so much suitable in all these cases wherein the cosmetic is produced in large amounts and/or for relatively low-cost cosmetics.

Moreover, as it is easy to imagine, the borders of the drawings made in this manner are not so much defined and therefore, even though they have a relatively high cost, are not much suitable for high level cosmetics, where the detail (that is the definition of the drawing in this case) has to be very accurate.

Moreover, by using this known technique, the making of drawings with many colours is rather complicated and still more time expensive, in some cases resulting also in being not implementable.

On the contrary, by providing to colour the drawing during the step impressing the image, according to the present invention, all the problems related to the prior art are overcome: the images impressed can be coloured by providing a layer of transfer ink on the face of the profile 4 printed in relief intended to come into contact with the charge of powdery cosmetic material, such that it is possible, during the same operation, not only to impress the drawing in the cosmetic, but also to colour it completely or partially.

This method generates very high quality drawings, since the border of the image impressed in the cosmetic acts contemporaneously also as a contour preventing the deposited ink from running: the contour is actually a physical border raised with respect to the area where the ink is deposited, such that the latter is not dispersed, making it possible to make even very thin lines, with well-defined and clean contours.

Moreover by making the colouring in this manner, the time is substantially the same as that for impressing the non-coloured image, with a clear advantage with respect to the known solution of the "stencil" type.

A further advantage relates to the provision of images in two or more colours: the provision of the contour delimited by the border of the image impressed in the cosmetic guarantees the fact that it is possible to apply two, three or more colours without them mixing together, therefore obtaining images coloured in any manner and with a high definition.

As regards the type of usable ink, the person skilled in the art, considering information provided herein and his/her skills, is able to select it observing the current regulations, changing from country to country, and that therefore are not set forth herein.

For example currently in Europe the Regulation (EC) No 1223/2009 of the European Parliament and of the Council of 30 November 2009 is valid which lists the properties of the cosmetic products, which have to be considered by the person skilled in the art when selecting the ink.

Such inks usually are based on solvents that evaporate after being applied: the Applicant has found that the most suitable solvents for this application are to be selected in the group comprising water, isoparaffins, ethylene dichloride, acetone, isopropyl alcohol (IPA).

As regards the profile printed in relief on the intermediate material sheet, in this evolved version it comprises also a layer of transfer ink provided on the face of said profile intended to come into contact with the charge of powdery cosmetic material, such to colour at least a part of said image impressed in the powdery cosmetic material.

In substance, the step for preparing the intermediate sheet 3 provides the printing, for example by serigraphy, of the profile 4 printed in relief, upon which a layer of transfer ink is further deposited, for example by printing process, which is intended to pigment or colour at least a part of the image transferred on the charge of powdery cosmetic material.

Thus the objects set forth above are achieved.

## Claims

1. A method for impressing images in a pressed powdery cosmetic material, comprising a step of pressing said powdery cosmetic material (2) obtained by means of a male mould (1) that pushes on said powdery cosmetic material (2) for pressing or packing it, preferably inside a base of a container, during said pressing step an intermediate sheet (3) being provided to be interposed between said male mould and said powdery cosmetic material
**characterized in that**
it comprises the step of arranging said intermediate sheet (3) by providing it at least with a profile printed in relief (4) in correspondence with at least one face (30) intended to come into contact with said charge of powdery cosmetic material (2), said profile (4) being able to impress a desired image in said powdery cosmetic material (2) during said pressing step.

2. A method according to claim 1, wherein during said step of pressing and impressing said image, a certain amount of air is removed from said powdery cosmetic material (2) through said sheet (3).

3. A method according to claim 1 or 2, wherein said profile (4) is printed in relief on said sheet by means of a step of serigraphic and / or flexographic printing with an ink.

4. A method according to claim 3, wherein said ink is a polyvinyl chloride (PVC)- based ink.

5. A method according to claim 4, wherein said polyvinyl chloride-based ink comprises a suspension of polyvinyl chloride (PVC) in plasticizers.

6. A method according to claim 3, 4 or 5, wherein said ink is
- deposited on said sheet (3)
- dried by heat treatment preferably at temperatures ranging from 60 °C to 100 °C in order to cause the ink to gel
- further dried at temperatures substantially ranging from 140 to 180 °C in order to cause the ink to melt, comprising a complete dissolution of PVC in said plasticizer.

7. A method according to one or more of the preceding claims, wherein said intermediate sheet (3) is a polyamide fabric.

8. A method according to one or more of the preceding claims, wherein on the same sheet (3) a plurality of profiles (40) are printed.

9. A method according to one or more of the preceding claims, comprising the step of depositing on said profile (4) printed in relief, in correspondence with its face intended to come into contact with the charge of powdery cosmetic material (2), at least one layer of transfer ink, intended to color at least partially said image impressed in the powdery cosmetic material (2) during said pressing step.

10. A device (3,4) for impressing images in a pressed powdery cosmetic material, comprising a male mould (1) that pushes on said powdery cosmetic material (2) for pressing or packing it, preferably inside a base of a container, **characterized in that** it comprises an intermediate sheet (3) provided at least with a profile printed in relief (4) in correspondence with at least one face (30) of said sheet (3) intended to come into contact with said charge of powdery cosmetic material (2), said profile (4) being able to impress a desired image in said powdery cosmetic material (2) during a pressing step.

11. A device (3,4) according to claim 10, wherein said sheet (3) is a polyamide fabric and wherein said profile printed in relief (4) is made with an ink printed on said sheet (3) by means of a serigraphy and/or by means of flexography.

12. Device (3, 4) according to claim 10 or 11, wherein said profile printed in relief comprises a layer of transfer ink on the face of said profile intended to come into contact with said charge of powdery cosmetic material (2), such to color at least a part of said image impressed in the powdery cosmetic material.

## Patentansprüche

1. Verfahren zum Einprägen von Bildern in ein gepresstes pulverförmiges Kosmetikmaterial, umfassend einen Schritt eines Pressens des pulverförmigen Kosmetikmaterials (2), der mittels einer Stempelform (1), die auf das pulverförmige Kosmetikmaterial (2) zum Pressen oder Verdichten desselben Druck ausübt, vorzugsweise innerhalb einer Basis eines Behälters erhalten wird, wobei während des Pressschrittes ein Zwischenblatt (3) zur Zwischenlage zwischen die Stempelform und das pulverförmige Kosmetikmaterial vorgesehen wird,
**dadurch gekennzeichnet, dass**
es den Schritt eines Anordnens des Zwischenblatts (3) umfasst, indem es zumindest mit einem als Relief (4) gedruckten Profil in Übereinstimmung mit zumindest einer Seite (30) versehen wird, die dafür vorgesehen ist, mit der Füllung von pulverförmigem Kosmetikmaterial (2) in Kontakt zu gelangen, wobei das Profil (4) in der Lage ist, während des Pressschrittes ein gewünschtes Bild in das pulverförmige Kosmetikmaterial (2) einzuprägen.

2. Verfahren nach Anspruch 1, wobei während des Press- und Einprägeschrittes des Bildes eine bestimmte Menge an Luft aus dem pulverförmigen Kosmetikmaterial (2) durch das Blatt (3) entfernt wird.

3. Verfahren nach Anspruch 1 oder 2, wobei das Profil (4) als Relief auf das Blatt mittels eines Siebdruck- und/oder Flexodruckschrittes mit einer Tinte gedruckt wird.

4. Verfahren nach Anspruch 3, wobei die Tinte eine Tinte auf Polyvinylchlorid-(PVC-)Basis ist.

5. Verfahren nach Anspruch 4, wobei die Tinte auf Polyvinylchloridbasis eine Suspension aus Polyvinylchlorid (PVC) in Weichmachern umfasst.

6. Verfahren nach Anspruch 3, 4 oder 5, wobei die Tinte
- auf dem Blatt (3) abgeschieden wird,
- durch Wärmebehandlung vorzugsweise bei Temperaturen in einem Bereich von 60°C bis 100°C getrocknet wird, um zu bewirken, dass die Tinte geliert,
- ferner bei Temperaturen im Wesentlichen in einem Bereich von 140 bis 180°C getrocknet wird, um zu bewirken, dass die Tinte schmilzt, was eine vollständige Auflösung des PVC in dem Weichmacher umfasst.

7. Verfahren nach einem oder mehreren der vorhergehenden Ansprüche, wobei das Zwischenblatt (3) ein Polyamidgewebe ist.

8. Verfahren nach einem oder mehreren der vorhergehenden Ansprüche, wobei auf das gleiche Blatt (3) eine Mehrzahl von Profilen (40) gedruckt wird.

9. Verfahren nach einem oder mehreren der vorhergehenden Ansprüche, umfassend den Schritt eines Abscheidens auf das als Relief gedruckte Profil (4) in Übereinstimmung mit seiner Seite, die dafür vorgesehen ist, mit der Füllung von pulverförmigem Kosmetikmaterial (2) in Kontakt zu gelangen, zumindest einer Schicht aus Transfertinte, die dafür vorgesehen ist, das Bild, das während des Pressschrittes in das pulverförmige Kosmetikmaterial (2) eingeprägt wird, zumindest teilweise zu färben.

10. Vorrichtung (3, 4) zum Einprägen von Bildern in ein gepresstes pulverförmiges Kosmetikmaterial, umfassend eine Stempelform (1), die auf das pulverförmige Kosmetikmaterial (2) zum Pressen oder Verdichten desselben Druck ausübt, vorzugsweise innerhalb einer Basis eines Behälters, **dadurch gekennzeichnet, dass** sie ein Zwischenblatt (3) umfasst, das zumindest mit einem als Relief (4) gedruckten Profil in Übereinstimmung mit zumindest einer Seite (30) des Blatts (3), die dafür vorgesehen ist, mit der Füllung von pulverförmigem Kosmetikmaterial (2) in Kontakt zu gelangen, versehen ist, wobei das Profil (4) in der Lage ist, während des Pressschrittes ein gewünschtes Bild in das pulverförmige Kosmetikmaterial (2) einzuprägen.

11. Vorrichtung (3, 4) nach Anspruch 10, wobei das Blatt (3) ein Polyamidgewebe ist, und wobei das als Relief (4) gedruckte Profil mit einer Tinte hergestellt ist, die mittels eines Siebdruckes und/oder mittels Flexodruckes auf das Blatt (3) gedruckt wird.

12. Vorrichtung (3, 4) nach Anspruch 10 oder 11, wobei das als Relief gedruckte Profil eine Schicht aus Transfertinte auf der Seite des Profils, die dafür vorgesehen ist, mit der Füllung von pulverförmigem Kosmetikmaterial (2) in Kontakt zu gelangen, umfasst, um zumindest einen Teil des in das pulverförmige Kosmetikmaterial eingeprägten Bildes zu färben.

## Revendications

1. Procédé pour imprimer des images dans une matière cosmétique pulvérulente pressée, comportant une étape de pressage de ladite matière cosmétique pulvérulente (2) réalisée à l'aide d'un moule mâle (1) qui appuie sur ladite matière cosmétique pulvérulente (2) pour la presser ou la tasser, de préférence à l'intérieur d'une base d'un récipient, une feuille intermédiaire (3) étant prévue pour être intercalée, pendant ladite étape de pressage, entre ledit moule mâle et ladite matière cosmétique pulvérulente,
**caractérisé en ce que**
il comporte l'étape de mise en place de ladite feuille intermédiaire (3) et dotant celle au moins d'un profil imprimé en relief (4) en regard d'au moins une face (30) destinée à venir au contact de ladite charge de matière cosmétique pulvérulente (2), ledit profil (4) étant apte à imprimer une image voulue dans ladite matière cosmétique pulvérulente (2) pendant ladite étape de pressage.

2. Procédé selon la revendication 1, dans lequel, pendant ladite étape de pressage et d'impression de ladite image, une certaine quantité d'air est chassée de ladite matière cosmétique pulvérulente (2) à travers ladite feuille (3).

3. Procédé selon la revendication 1 ou 2, dans lequel ledit profil (4) est imprimé en relief sur ladite feuille à l'aide d'une étape d'impression sérigraphique et/ou flexographique employant une encre.

4. Procédé selon la revendication 3, dans lequel ladite encre est une encre à base de polychlorure de vinyle (PVC).

5. Procédé selon la revendication 4, dans lequel ladite encre à base de polychlorure de vinyle comprend une suspension de polychlorure de vinyle (PVC) dans des plastifiants.

6. Procédé selon la revendication 3, 4 ou 5, dans lequel ladite encre est
- déposée sur ladite feuille (3) ;
- séchée par traitement thermique, de préférence à des températures de 60°C à 100°C, afin de transformer l'encre en gel ;
- séchée une nouvelle fois à des températures sensiblement de 140 à 180°C afin de faire fondre l'encre, ce qui inclut une dissolution complète du PVC dans ledit plastifiant.

7. Procédé selon une ou plusieurs des revendications précédentes, dans lequel ladite feuille intermédiaire (3) est un tissu en fibres de polyamide.

8. Procédé selon une ou plusieurs des revendications précédentes, dans lequel une pluralité de profils (40) sont imprimés sur la même feuille (3).

9. Procédé selon une ou plusieurs des revendications précédentes" comportant l'étape de dépôt sur ledit profil (4) imprimé en relief, en regard de sa face destinée à venir au contact de la charge de matière cosmétique pulvérulente (2), d'au moins une couche d'encre à report destinée à colorer au moins partiellement ladite image imprimée dans la matière cosmétique pulvérulente (2) pendant ladite étape de pressage.

10. Dispositif (3, 4) pour imprimer des images dans une matière cosmétique pulvérulente pressée, comportant un moule mâle (1) qui appuie sur ladite matière cosmétique pulvérulente (2) pour la presser ou la tasser, de préférence à l'intérieur d'une base d'un récipient, **caractérisé en ce qu'**il comporte une feuille intermédiaire (3) pourvue d'au moins un profil imprimé en relief (4) en regard d'au moins une face (30) de ladite feuille (3) destinée à venir au contact de ladite charge de matière cosmétique pulvérulente (2), ledit profil (4) étant apte à imprimer une image voulue dans ladite matière cosmétique pulvérulente (2) pendant une étape de pressage.

11. Dispositif (3, 4) selon la revendication 10, dans lequel ladite feuille (3) est un tissu en fibres de polyamide et dans lequel ledit profil imprimé en relief (4) est créé à l'aide d'une encre imprimée par sérigraphie et/ou par sérigraphie sur ladite feuille (3).

12. Dispositif (3, 4) selon la revendication 10 ou 11, dans lequel ledit profil imprimé en relief comprend, sur la face dudit profil destiné à venir au contact de ladite charge de matière cosmétique pulvérulente (2), une couche d'encre à report afin de colorer au moins une partie de ladite image imprimée dans la matière cosmétique pulvérulente.
